# EUROPEAN PATENT SPECIFICATION

(11) **EP 4 108 818 B1**
(45) Date of publication and mention of the grant of the patent: **10.12.2025**
(21) Application number: 22176273.5
(22) Date of filing: 31.05.2022
(51) Int. Cl.: D02G 3/44, D01D 5/253, D21F 1/00, D03D 15/44

(54) **AN INDUSTRIAL TEXTILE COMPRISING A MONOFILAMENT YARN**
INDUSTRIETEXTIL MIT EINEM MONOFILAMENTGARN
TEXTILE INDUSTRIEL COMPRENANT UN FIL MONOFILAMENT

(30) Priority: 04.06.2021 FI 20215654
(43) Date of publication of application: 28.12.2022
(73) Proprietor: Valmet Technologies, Inc., 02150 Espoo (FI)
(72) Inventor: ENQVIST, Rauno, 02150 Espoo (FI); MARTIKAINEN, Hannu, 02150 Espoo (FI); PAAVOLAINEN, Juha, 02150 Espoo (FI)
(74) Representative: Laine IP Oy

(56) References cited:
- WO-A1-2018/101827
- DE-A1- 102005 056 472
- US-A- 6 037 047

## Description

### FIELD

The invention relates to monofilament yarns, particularly to monofilament yarns used in industrial textiles.

### BACKGROUND

Yarns having circular or flat rectangle shaped cross-sections normal to their longitudinal axes are commonly used for weaving industrial textiles. Circular wefts have high strength against high power shower used for cleaning the industrial textiles, but they have a poor warp coverage. Flat wefts instead provide a good warp coverage and a smooth surface for the textile, which causes less marking. However, they have the tendency to crack and fibrillate.

High power shower can have power of for example, 500 to 600 bars. High power shower is guided through nozzles having a diameter of 0.2 to 0.5 mm, for example. When the industrial textile is cleaned by this thin powerful shower, the flat rectangle shaped yarns have the tendency to crack due to poor high power shower resistance. In addition, water has the tendency to splash randomly from the flat surfaces of the yarns.

In use, industrial textiles are usually configured as endless belts. Opposing ends of the industrial textile are seamed together to form a continuous loop during installation of the fabric on an equipment. One conventional method of seaming is to form the machine direction yarns on each end of the fabric into a series of loops. The loops of the respective fabric ends are then intermeshed during fabric installation to define a loop channel through which a pintle is inserted to lock the ends together. However, corners of the flat rectangle shaped yarns resist a seaming yarn to go thought the loop channel. Further, the flat yarns have the tendency to split under tension and during the use of the textile.

US6037047 discloses a yarn comprising a plurality of filaments. Each of the filaments comprises a synthetic melt spun polymer having a relative viscosity of about 24 to about 42, about 4.4 dtex to about 8.8 dtex (a denier of about 4 to about 8), and a tenacity of about 57.5 cN/tex (6.5 grams/denier) to about 81.4 cN/tex (9.2 grams/denier). Each of the filaments have an elongated diamond shaped cross section normal to a longitudinal axis of the filament. However, the yarn has a complex cross-sectional shape. Furthermore, the plurality of small filaments having acute corners form an uneven surface into the yarn. When the yarns are woven into a paper machine fabric, the acute corners can even cause breakage of a produced web. In addition, the yarn may not hold its shape under the load and may not withstand high power shower.

DE 102005056472 A1 discloses a paper machine cover for drying a paper web, comprising a layer of transverse threads crossing a layer of longitudinal threads, the longitudinal threads comprise threads with a rhomboidal cross-section.

WO 2018/101827 A1 discloses a fibre for use in artificial turf having an elongate cross-sectional shape defining a first face and a second face that meet at side edges of the fibre. The first and second faces having respective first and second ridges that are offset with respect to each other, such that the cross-sectional shape is 2-fold rotationally symmetric with no reflectional symmetry.

Therefore, there is need for improving the above mentioned properties.

### SUMMARY OF THE INVENTION

The object of at least some embodiments of the present invention is to provide a yarn having a cross-sectional shape, which has improved high power cleaning resistance against shower impact, and improved bending behavior. The object of at least some embodiments of the present invention is to provide a yarn having easy seaming properties.

According to an aspect of the present invention, there is provided an industrial textile comprising a plurality of warps in a first direction, and a plurality of wefts in a second direction, which is substantially perpendicular to the first direction, wherein at least some of the warps and/or at least some of the wefts comprise polygon shaped monofilament yarns. The polygon shaped monofilament yarns have a width and a height, which width is greater than the height, said width being 0.1 to 3 mm, and four corners of which first two corners have angles of over 90 degrees and second two opposite corners have angles under 90 degrees, wherein the first two opposite corners and the second two opposite corners are rounded, the first two opposite corners have a radius of 0.1 to 0.15 mm, and the second two opposite corners have a radius of 0.075 to 0.1 mm.

The industrial textile has two opposite surfaces, wherein the two sides adjacent to one of the first two opposite corners of a polygon shaped monofilament yarn form at least a part of one of the surfaces.

According to an embodiment of the present invention, the industrial textile is a paper making fabric, such as a dryer fabric or a forming fabric, or a filter fabric, such as a disc filter, a horizontal vacuum belt filter, a belt filter press, a twin wire press, a drum filter, a pan filter, a gravity table or a filter press.

### BRIEF DESCRIPTION OF THE DRAWINGS

FIGURE 1 illustrates a monofilament yarn in accordance with at least some embodiments of the present invention;
FIGURE 2 illustrates a monofilament yarn not covered by the claimed subject-matter; and
FIGURE 3 illustrates an industrial textile having the monofilament yarn as a warp in accordance with at least some embodiments of the present invention.

### EMBODIMENTS

In the present context, the term "polygon" refers to a shape having a plurality of corners, preferably four to seven corners, more preferably four to six corners, most preferably four corners.

In the present context, the term "industrial textile" refers to a woven structure comprising a plurality of warps in a first direction and a plurality of wefts in a second direction. The second direction is substantially perpendicular to the first direction. The first direction can be a machine direction and the second direction can be a cross-machine direction. Seam ends of the industrial textile can be connected to each other for forming a seam when installed on an equipment. The industrial textile can be configured to run in the machine direction.

In the present context, the term "machine direction" refers to a moving direction of the textile in the paper, board or tissue machine when the textile is assembled to the paper, board or tissue machine.

In the present context, the term "cross machine direction" refers to a direction, which is perpendicular to the moving direction of the textile in the paper, board or tissue machine when the textile is assembled to the paper, board or tissue machine.

In the present context, the term "first surface" refers to a surface of the industrial textile, which is in contact with paper, board or tissue produced, when the textile is assembled in a paper, board or tissue machine, or through which fluid is filtered, when the textile is assembled on a filtering equipment.

In the present context, the term "second surface" refers to a surface of the industrial textile, which is in contact with a paper, board or tissue machine equipment or a filtering equipment, when the textile is assembled to the paper, board or tissue machine or the filtering equipment.

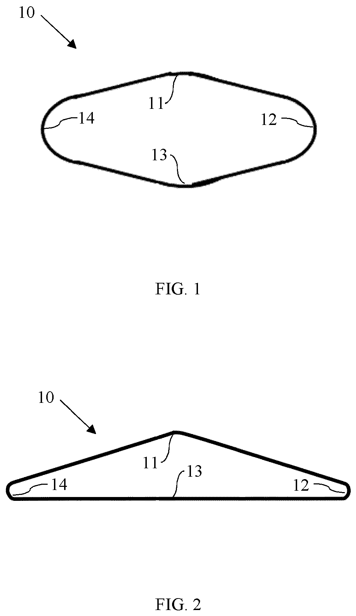

FIGURE 1 illustrates a monofilament yarn 10 according to some embodiments. The yarn has a polygon, such as an elongated diamond shaped, cross-section. The cross-section has a width and a height, which width is greater than the height, and four corners 11, 12, 13, 14. First two opposite corners 11, 13 have angles of over 90 degrees. Second two opposite corners 12, 14 have angles under 90 degrees. The said width is 0.1 to 3 mm.

According to some embodiments, the width is 0.3 to 2 mm, preferably 0.6 to 1.2 mm.

The polygon shaped cross-section of the yarn provides improved bending behavior and cracking resistance. When the yarn is woven into an industrial textile, the yarn has improved cleaning resistance against a high power washing liquid flow or flushing flow due to the polygon shaped cross-section. Further, the shape provides better cleaning result, because the corners having angles of over 90 degrees guide the flow along the slanted sides of the yarn towards an inner structure of the textile, and the flow is not splashed randomly away from the surface. The flow is more effectively utilized for removing accumulated dirt and fibers from the textile structure. Thus, properties of the industrial textile can be recovered and operational life of the textile can be longer than in known solutions. Since the washing energy is directed effectively through the textile, lower pressures may be used in the washing liquid flows and the flushing flows. Further, the washing liquid flows and the flushing flows having lower pressures do not damage structures of the yarns of the textile. In addition, the textile is easy to seam.

The first two opposite corners 11, 13 and the second two opposite corners 12, 14 are rounded. When the corners 11, 12, 13, 14 are rounded, there are no sharp corners, which can cause for example, marking of the produced web. Further, the shape of the yarn allows a seaming yarn to go smoothly in a loop channel, because there are no sharp yarn corners resisting.

The rounded first two opposite corners 11, 13 of the monofilament yarn 10 have a radius of 0.1 to 0.15 mm.

The rounded second two opposite corners 12, 14 of the monofilament yarn 10 have a radius of 0.075 to 0.1 mm.

According to some embodiments the height of the cross-section of the monofilament yarn 10 is 0.05 to 1.0 mm. This enables producing of a thin textile.

According to some embodiments, a ratio of the height to the width of the monofilament yarn 10 is 2:2.1 to 2:6, preferably to 2:2.5 to 2:4. This enables good warp coverage and producing of a thin textile.

The first two opposite corners 11, 13 of the monofilament yarn 10 can have equal angles and/or the second two opposite corners 12, 14 can have equal angles. Then, the angle of the corner 11 can be the same than the angle of the opposite corner 13 and/or the angle of the corner 12 can be the same than the angle of the opposite corner 14. Thus, the cross-section of the monofilament yarn 10 can be symmetric.

Alternatively, the first two opposite corners 11, 13 have different angles and/or the second two opposite corners 12, 14 have different angles. Then, the angle of the corner 11 can be greater/smaller than the angle of the opposite corner 13 and/or the angle of the corner 12 can be greater/smaller than the angle of the opposite corner 14. Thus, the cross-section of the monofilament yarn 10 can be asymmetric. When the monofilament yarn 10 is a weft, the asymmetric cross-section enables producing a variety of different surface shapes to the industrial textile 20, which enables producing of different surface properties and seam properties.

The angles of the first two opposite corners 11, 13 of the monofilament yarn 10 are between 90 to 180 degrees, preferably between 90 to 170 degrees.

The angles of the second two opposite corners 12, 14 of the monofilament yarn 10 can be 10 to 80 degrees, preferably 20 to 50 degrees.

FIGURE 2 illustrates a monofilament yarn 10, which is not covered by the claimed subject-matter. One corner 13 of the first two opposite corners 11, 13 has an angle of 180 degrees. Then, a side opposite to the other corner 11 of the first two opposite corners 11, 13 is flat.

The monofilament yarn 10 can be solid. Solid is understood to be massive and non-porous. So, there are no voids or cavities in the yarn.

According to some embodiments, the monofilament yarn 10 consists essentially of a virgin or recycled thermoplastic polymer, such as polyethylene terephthalate (PET), polyphenylene sulfide (PPS), polyketone (PK), polyether ether ketone (PEEK), polyamide (PA), polypropylene (PP), polyvinylidene difluoride (PVDF), or biopolymer. The PPS yarn possess excellent heat and chemical resistance, high dimensional stability, low moisture absorption and high resistance to hydrolysis. The PET yarn possess restricted properties compared to the PPS yarn in many respect but they give extra elasticity for example, to the dryer fabric.

The yarn 10 comprising polyketone (PK) can comprise another polymer as a blend, or there may be a core or a sheath structure. There can be a polyketone sheath and a core of another polymer.

According to some embodiments, the monofilament yarn 10 consists essentially of a virgin or recycled thermoplastic aliphatic polyketone (PK) as a first polymer, and virgin or recycled polyolefin (PO), polyester (PES), polyphenylene sulfone (PPSU), polyurethane (PU), polyphenylene sulfide (PPS), polyphenylene ether (PPE), polyphenylene ketone, polyphenylene etherketone (PEEK), liquid crystalline polymer and/or aliphatic polyketone as a second polymer.

The thermoplastic polymer may comprise additives, such as pigments, light stabilizers, heat and oxidation stabilizers, additives for reducing static, and additives for modifying dye.

The thermoplastic polymer, such as PET, can comprise a chemical hydrolysis stabilizer for preventing degradation. The chemical hydrolysis stabilizer can be a carboimide compound, such as a cyclic carboimide compound, an aromatic polycarbodiimide, or a mono-meric carbodiimide.

The thermoplastic polymer can be melt spun into the monofilament yarn.

The industrial textile 20 comprises a plurality of warps 31, 32 in a first direction and a plurality of wefts 33 in a second direction, which is substantially perpendicular to the first direction. At least some of the warps 31, 32 and/or at least some of the wefts 33 comprise the above described monofilament yarns 10.

Thus, at least some of the warps 31, 32 or at least some of the wefts 33 are the monofilament yarns 10. Then, the warps 31, 32 or the wefts 33 can comprise only the monofilament yarns 10, or at least some of the warps 31, 32 or at least some of the wefts 33 comprise the monofilament yarns 10. The warps 31, 32 and the wefts 33 can be made of same or different materials.

Alternatively, at least some of the warps 31, 32 and at least some of the wefts 33 can comprise the monofilament yarns 10. Then, the industrial textile 20 can comprise only the monofilament yarns 10, or at least some of the warps 31, 32 and at least some of the wefts 33 comprise the monofilament yarns 10. The wefts 33 and the warps 31, 32 can be made of same or different materials.

When at least some of the warps 31, 32 comprise the monofilament yarn 10, cross-sections of the wefts 33 can be round, square, rectangular, oval or any other suitable shape. The wefts 33 can be monofilament yarns. The warps 31, 32 and the wefts 33 can be made of same or different materials.

Respectively, when at least some of the wefts 33 comprise the monofilament yarn 10, cross-sections of the warps 31, 32 can be round, square, rectangular, oval or any other suitable shape. The warps 31, 32 can be monofilament yarns. The wefts 33 and the warps 31, 32 can be made of same or different materials.

According to some embodiments, at least some of the warps 31, 32 and at least some of the wefts 33 of the industrial textile 20 comprise the monofilament yarn 10. Then, all of the warps 31, 32 and all of the wefts 33 can comprise the monofilament yarn 10.

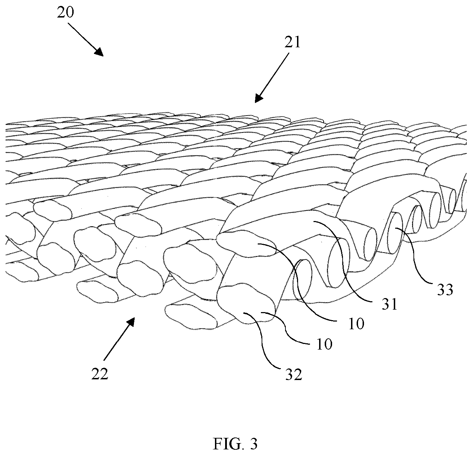

FIGURE 3 illustrates an industrial textile 20 according to some embodiments. The industrial textile 20 comprises a plurality of the monofilament yarns 10 having the polygon shaped cross-section as warps 31, 32 and a plurality of round yarns as wefts 33. The warps 31, 32 extend in a first direction and the wefts 33 extend in a second direction, which is substantially perpendicular to the first direction. The textile comprises a double warp. The double warp comprises a first warp 31 and a second warp 32 in the first direction. The yarns of the first warp 31 are arranged above the yarns of the second warp 32.

FIGURE 3 illustrates that the industrial textile 20 has two opposite surfaces: a first surface 21 and a second surface 22. The two sides adjacent to one of the first two opposite corners 11, 13 of a monofilament yarn 10 form at least a part of one of the surfaces 21, 22. Thus, the first two opposite corners 11, 13 of the monofilament yarns 10 form substantially the first surface 21 and the second surface 22 of the industrial textile 20. This provides a smooth surface on the first surface of the industrial textile for preventing generation of markings to a fibre web. Furthermore, this provides improved cleaning resistance against a high power washing liquid flow or flushing flow. The shape of the monofilament yarn directs a shower flow into the fabric structure and enables better cleaning result.

FIGURE 3 further illustrates that the monofilament yarns 10 are at the same angle relatively to the first surface 21 of the industrial textile 20. This enables a smooth surface on the first surface of the industrial textile 20.

However, the monofilament yarns 10 of the industrial textile 20 can be set to different angles relatively to the first surface 21 of the industrial textile 20. This enables of modifying properties of the first surface, such as filtering properties.

The industrial textile 20 can be a paper making fabric, such as a dryer fabric or a forming fabric, or a filter fabric, such as a disc filter, a horizontal vacuum belt filter, a belt filter press, a twin wire press, a drum filter, a pan filter, a gravity table or a filter press.

### REFERENCE SIGNS LIST

- 10: monofilament yarn
- 11: corner
- 12: corner
- 13: corner
- 14: corner
- 20: industrial textile
- 21: first surface of the industrial textile
- 22: second surface of the industrial textile
- 31: first warp
- 32: second warp
- 33: weft

## Claims

1. An industrial textile (20) comprising:
- a plurality of warps (31, 32) in a first direction, and
- a plurality of wefts (33) in a second direction, which is substantially perpendicular to the first direction,
wherein at least some of the warps (31, 32) and/or at least some of the wefts (33) comprise polygon shaped monofilament yarns (10),
wherein the polygon shaped monofilament yarns (10) have:
- a width and a height, which width is greater than the height, said width being 0.1 to 3 mm, and
- four corners (11, 12, 13, 14) of which
- first two opposite corners (11, 13) have angles of over 90 degrees, and
- second two opposite corners (12, 14) have angles under 90 degrees, wherein the first two opposite corners (11, 13) and the second two opposite corners (12, 14) are rounded,
the first two opposite corners (11, 13) have a radius of 0.1 to 0.15 mm, the second two opposite corners (12, 14) have a radius of 0.075 to 0.1 mm, and
wherein the industrial textile (20) has two opposite surfaces (21, 22), wherein the two sides adjacent to one of the first two opposite corners (11, 13) of a polygon shaped monofilament yarn (10) form at least a part of one of the surfaces (21, 22).

2. The industrial textile (20) of claim 1, wherein the width is 0.3 to 2 mm, preferably 0.6 to 1.2 mm.

3. The industrial textile (20) of claim 1 or 2, wherein the height is 0.05 to 1.0 mm.

4. The industrial textile (20) of any one of the preceding claims, wherein a ratio of the height to the width is 2:2.1 to 2:6, preferably to 2:2.5 to 2:4.

5. The industrial textile (20) of any one of the preceding claims, wherein the first two opposite corners (11, 13) have equal angles and/or the second two opposite corners (12, 14) have equal angles.

6. The industrial textile (20) of any one of the preceding claims 1 to 4, wherein the first two opposite corners (11, 13) have different angles and/or the second two opposite corners (12, 14) have different angles.

7. The industrial textile (20) of any one of the preceding claims, wherein angles of the second two opposite corners (12, 14) is 10 to 80 degrees, preferably 20 to 50 degrees.

8. The industrial textile (20) of any one of the preceding claims, wherein the yarn (10) is solid.

9. The industrial textile (20) of any one of the preceding claims, wherein the yarn (10) consists essentially of a virgin or recycled thermoplastic polymer, such as polyethylene terephthalate, polyphenylene sulfide, polyketone, polyether ether ketone, polyamide, polypropylene, polyvinylidene difluoride, or biopolymer.

10. The industrial textile (20) of any one of the preceding claims 1 to 8, wherein the yarn (10) consists essentially of a virgin or recycled aliphatic polyketone as a first polymer, and virgin or recycled polyolefin, polyester, polyphenylene sulfone, polyurethane, polyphenylene sulfide, polyphenylene ether, polyphenylene ketone, polyphenylene etherketone, liquid crystalline polymer and/or aliphatic polyketone as a second polymer.

11. The industrial textile (20) of any one of the preceding claims,
wherein at least some of the warps (31, 32) comprise the monofilament yarn (10) and the wefts (33) have round, square, rectangular or oval cross-section, or
wherein at least some of the wefts (33) comprise the monofilament yarn (10) and the warps (31, 32) have round, square, rectangular or oval cross-section.

12. The industrial textile (20) of any one of the preceding claims, wherein at least some of the warps (31, 32) and at least some of the wefts (33) comprise the monofilament yarn (10).

13. The industrial textile (20) of any one of the preceding claims, wherein the industrial textile (20) is a paper making fabric, such as a dryer fabric or a forming fabric, or a filter fabric, such as a disc filter, a horizontal vacuum belt filter, a belt filter press, a twin wire press, a drum filter, a pan filter, a gravity table or a filter press.

## Patentansprüche

1. Industrietextil (20), umfassend:
- eine Vielzahl von Kettfäden (31, 32) in einer ersten Richtung, und
- eine Vielzahl von Schussfäden (33) in einer zweiten Richtung, die im Wesentlichen senkrecht zu der ersten Richtung ist,
wobei mindestens einige der Kettfäden (31, 32) und/oder mindestens einige der Schussfäden (33) polygonförmige Monofilamentgarne (10) umfassen,
wobei die polygonförmigen Monofilamentgarne (10) Folgendes aufweisen:
- eine Breite und eine Höhe, wobei die Breite größer ist als die Höhe, wobei die Breite 0,1 bis 3 mm beträgt, und
- vier Ecken (11, 12, 13, 14), von denen
- die ersten zwei gegenüberliegenden Ecken (11, 13) Winkel von über 90 Grad aufweisen, und
- die zweiten zwei gegenüberliegenden Ecken (12, 14) Winkel unter 90 Grad aufweisen, wobei die ersten zwei gegenüberliegenden Ecken (11, 13) und die zweiten zwei gegenüberliegenden Ecken (12, 14) abgerundet sind,
wobei die ersten zwei gegenüberliegenden Ecken (11, 13) einen Radius von 0,1 bis 0,15 mm aufweisen,
wobei die zweiten zwei gegenüberliegenden Ecken (12, 14) einen Radius von 0,075 bis 0,1 mm aufweisen und
wobei das Industrietextil (20) zwei gegenüberliegende Oberflächen (21, 22) aufweist, wobei die zwei Seiten, die an eine der ersten zwei gegenüberliegenden Ecken (11, 13) eines polygonförmigen Monofilamentgarns (10) angrenzen, mindestens einen Teil einer der Oberflächen (21, 22) bilden.

2. Industrietextil (20) nach Anspruch 1, wobei die Breite 0,3 bis 2 mm, vorzugsweise 0,6 bis 1,2 mm beträgt.

3. Industrietextil (20) nach Anspruch 1 oder 2, wobei die Höhe 0,05 bis 1,0 mm beträgt.

4. Industrietextil (20) nach einem der vorstehenden Ansprüche, wobei ein Verhältnis der Höhe zu der Breite 2:2,1 bis 2:6, vorzugsweise zu 2:2,5 bis 2:4 beträgt.

5. Industrietextil (20) nach einem der vorstehenden Ansprüche, wobei die ersten zwei gegenüberliegenden Ecken (11, 13) gleiche Winkel aufweisen und/oder die zweiten zwei gegenüberliegenden Ecken (12, 14) gleiche Winkel aufweisen.

6. Industrietextil (20) nach einem der vorstehenden Ansprüche 1 bis 4, wobei die ersten zwei gegenüberliegenden Ecken (11, 13) unterschiedliche Winkel aufweisen und/oder die zweiten zwei gegenüberliegenden Ecken (12, 14) unterschiedliche Winkel aufweisen.

7. Industrietextil (20) nach einem der vorstehenden Ansprüche, wobei die Winkel der zweiten zwei gegenüberliegenden Ecken (12, 14) 10 bis 80 Grad, vorzugsweise 20 bis 50 Grad betragen.

8. Industrietextil (20) nach einem der vorstehenden Ansprüche, wobei das Garn (10) massiv ist.

9. Industrietextil (20) nach einem der vorstehenden Ansprüche, wobei das Garn (10) im Wesentlichen aus einem neuen oder recycelten thermoplastischen Polymer besteht, wie Polyethylenterephthalat, Polyphenylensulfid, Polyketon, Polyetheretherketon, Polyamid, Polypropylen, Polyvinylidenfluorid oder Biopolymer.

10. Industrietextil (20) nach einem der vorstehenden Ansprüche 1 bis 8, wobei das Garn (10) im Wesentlichen aus einem neuen oder recycelten aliphatischen Polyketon als ein erstes Polymer und neuem oder recyceltem Polyolefin, Polyester, Polyphenylensulfon, Polyurethan, Polyphenylensulfid, Polyphenylenether, Polyphenylenketon, Polyphenylenetherketon, flüssigkristallinem Polymer und/oder aliphatischem Polyketon als ein zweites Polymer besteht.

11. Industrietextil (20) nach einem der vorstehenden Ansprüche,
wobei mindestens einige der Kettfäden (31, 32) das Monofilamentgarn (10) umfassen und die Schussfäden (33) einen runden, quadratischen, rechteckigen oder ovalen Querschnitt aufweisen, oder wobei mindestens einige der Schussfäden (33) das Monofilamentgarn (10) umfassen und die Kettfäden (31, 32) einen runden, quadratischen, rechteckigen oder ovalen Querschnitt aufweisen.

12. Industrietextil (20) nach einem der vorstehenden Ansprüche, wobei mindestens einige der Kettfäden (31, 32) und mindestens einige der Schussfäden (33) das Monofilamentgarn (10) umfassen.

13. Industrietextil (20) nach einem der vorstehenden Ansprüche, wobei das Industrietextil (20) ein Papierherstellungsgewebe, wie ein Trockengewebe oder ein Formiergewebe oder ein Filtergewebe, wie ein Scheibenfilter, ein horizontaler Vakuumbandfilter, eine Bandfilterpresse, eine Doppelsiebpresse, ein Trommelfilter, ein Tellerfilter, ein Seihtisch oder eine Filterpresse ist.

## Revendications

1. Textile industriel (20) comprenant :
- une pluralité de chaînes (31, 32) dans une première direction, et
- une pluralité de trames (33) dans une seconde direction, qui est sensiblement perpendiculaire à la première direction,
dans lequel au moins une partie des chaînes (31, 32) et/ou au moins une partie des trames (33) comprennent des fils monofilaments en forme de polygone (10),
dans lequel les fils monofilaments en forme de polygone (10) présentent :
- une largeur et une hauteur, laquelle largeur est supérieure à la hauteur, ladite largeur étant de 0,1 à 3 mm, et
- quatre coins (11, 12, 13, 14) dont
- deux premiers coins opposés (11, 13) présentent des angles de plus de 90 degrés, et
- deux seconds coins opposés (12, 14) présentent des angles inférieurs à 90 degrés, dans lequel les deux premiers coins opposés (11, 13) et les deux seconds coins opposés (12, 14) sont arrondis,
les deux premiers coins opposés (11, 13) présentent un rayon de 0,1 à 0,15 mm,
les deux seconds coins opposés (12, 14) présentent un rayon de 0,075 à 0,1 mm, et
dans lequel le textile industriel (20) présente deux surfaces opposées (21, 22), dans lequel les deux côtés adjacents à l'un des deux premiers coins opposés (11, 13) d'un fil monofilament en forme de polygone (10) forment au moins une partie de l'une des surfaces (21, 22).

2. Textile industriel (20) selon la revendication 1, dans lequel la largeur est de 0,3 à 2 mm, de préférence de 0,6 à 1,2 mm.

3. Textile industriel (20) selon la revendication 1 ou 2, dans lequel la hauteur est de 0,05 à 1,0 mm.

4. Textile industriel (20) selon l'une quelconque des revendications précédentes, dans lequel un rapport entre la hauteur et la largeur est de 2:2,1 à 2:6, de préférence de 2:2,5 à 2:4.

5. Textile industriel (20) selon l'une quelconque des revendications précédentes, dans lequel les deux premiers coins opposés (11, 13) présentent des angles égaux et/ou les deux seconds coins opposés (12, 14) présentent des angles égaux.

6. Textile industriel (20) selon l'une quelconque des revendications précédentes 1 à 4, dans lequel les deux premiers coins opposés (11, 13) présentent des angles différents et/ou les deux seconds coins opposés (12, 14) présentent des angles différents.

7. Textile industriel (20) selon l'une quelconque des revendications précédentes, dans lequel des angles des deux seconds coins opposés (12, 14) sont de 10 à 80 degrés, de préférence de 20 à 50 degrés.

8. Textile industriel (20) selon l'une quelconque des revendications précédentes, dans lequel le fil (10) est solide.

9. Textile industriel (20) selon l'une quelconque des revendications précédentes, dans lequel le fil (10) est constitué essentiellement d'un polymère thermoplastique vierge ou recyclé, tel que le polyéthylène téréphtalate, le polysulfure de phénylène, la polycétone, le polyétheréthercétone, le polyamide, le polypropylène, le difluorure de polyvinylidène ou un biopolymère.

10. Textile industriel (20) selon l'une quelconque des revendications précédentes 1 à 8, dans lequel le fil (10) est constitué essentiellement d'une polycétone aliphatique vierge ou recyclée comme premier polymère et d'une polyoléfine vierge ou recyclée, d'un polyester, d'un polyphénylène sulfone, d'un polyuréthane, d'un polysulfure de phénylène, d'un polyéther de phénylène, d'un polyphénylène cétone, d'un polyphénylène éther cétone, d'un polymère cristal liquide et/ou d'une polycétone aliphatique comme second polymère.

11. Textile industriel (20) selon l'une quelconque des revendications précédentes,
dans lequel au moins une partie des chaînes (31, 32) comprennent le fil monofilament (10) et les trames (33) présentent une section transversale ronde, carrée, rectangulaire ou ovale, ou dans lequel au moins une partie des trames (33) comprennent le fil monofilament (10) et les chaînes (31, 32) présentent une section transversale ronde, carrée, rectangulaire ou ovale.

12. Textile industriel (20) selon l'une quelconque des revendications précédentes, dans lequel au moins une partie des chaînes (31, 32) et au moins une partie des trames (33) comprennent le fil monofilament (10).

13. Textile industriel (20) selon l'une quelconque des revendications précédentes, dans lequel le textile industriel (20) est un tissu de fabrication de papier, tel qu'une toile sécheuse ou une toile de formation, ou un tissu pour filtre, tel qu'un filtre à disques, un filtre à bandes à vide horizontal, un filtre-presse à bande, une presse à double toile, un filtre à tambour, un filtre statique, une table de gravité ou un filtre-presse.
